# EUROPEAN PATENT SPECIFICATION

(11) **EP 3 882 085 B1**
(45) Date of publication and mention of the grant of the patent: **28.01.2026**
(21) Application number: 19884537.2
(22) Date of filing: 13.11.2019
(51) Int. Cl.: B60R 13/02, B60Q 3/20, B60Q 3/54, B60K 37/00, B60K 37/20, B60K 35/22, B60Q 3/14

(54) **VEHICLE INTERIOR TRIM PIECE**
INNENVERKLEIDUNGSTEIL FÜR EIN KRAFTFAHRZEUG
PIÈCE DE GARNITURE INTÉRIEURE DE VÉHICULE

(30) Priority: 14.11.2018 CN 201811356630; 14.11.2018 CN 201821877678 U
(43) Date of publication of application: 22.09.2021
(73) Proprietor: Shanghai Yanfeng Jinqiao Automotive Trim Systems Co., Ltd., Shanghai 201206 (CN)
(72) Inventor: WANG, Chun, Shanghai 201206 (CN)
(74) Representative: Meissner Bolte Partnerschaft mbB
(86) International application number: PCT/CN2019/117834
(87) International publication number: WO 2020/098665

(56) References cited:
- EP-B1- 1 839 945
- CN-A- 101 236 301
- CN-A- 102 198 749
- CN-A- 102 416 910
- CN-A- 107 627 953
- CN-A- 109 398 258
- CN-U- 202 966 147
- CN-U- 207 274 074
- CN-U- 207 274 074
- CN-U- 207 860 106
- CN-Y- 2 871 308
- CN-Y- 2 871 308
- DE-A1- 3 235 752
- US-A1- 2009 080 208

## Description

### TECHNICAL FIELD

The present invention relates to an interior trim and more particularly to a vehicle interior trim/component.

### BACKGROUND ART

With the continuous improvement of living standards of people, current vehicle consumers not only have high requirements on driving performance and safety of the vehicle, but also have higher and higher requirements on environment in the vehicle. A vehicle interior lamp in the environment can not only provide a lighting function but can also give the whole vehicle a feeling/emotion which is a brand-new human-machine interaction mode. Different colors can give different psychological stimuli to vehicle owners. However, in the current market, display types of vehicle interior lamps in the environment are very basic with light usually directly projected on the surface of a part or directly displayed through a light pipe so that the attractiveness is inadequate and the decorative effect is poor. An interior trim panel according to the prior art is known from CN 207 860 106 U.

Accordingly, there is a need to design a new vehicle interior trim to better demonstrate its functionality and its decorative effect.

### SUMMARY OF THE INVENTION

The invention is intended to provide a vehicle interior trim piece in order to solve the problems of a single structure and the poor decorative effect of a vehicle interior lamp in the environment in the prior art.

In order to solve the technical problem, the present invention adopts a technical approach according to claim 1 which inter alia comprises a vehicle interior trim piece, comprising a light-transmissive skin layer and a pattern layer, wherein the pattern layer comprises multiple graphic areas, a graphic that corresponds to at least one graphic area among the multiple graphic areas will only be shown on a viewable surface of the vehicle interior trim piece when the vehicle interior trim piece is illuminated by visible light emitted by a back surface, and the graphic shown on the viewable surface of the vehicle interior trim piece changes in response to changes to a color of the visible light.

Preferably, the multiple graphic areas of the pattern layer at least partially overlap to form an overlapping area.

Preferably, when the pattern layer is one layer, the overlapping area of the multiple graphic areas is disposed to be colorless and transparent or translucent, other areas of the multiple graphic areas only allow light corresponding to a color of the graphic area to transmit through, and peripheral areas surrounding the multiple graphic areas do not allow the light to transmit through.

Preferably, when the pattern layer is of multiple layers, the multiple graphic areas are respectively located at different said pattern layers, the multiple graphic areas are disposed to be colorless and transparent or translucent, and peripheral areas of each of the pattern layers surrounding the multiple graphic areas only allow light corresponding to a color of the peripheral area to transmit through.

The change of the graphic may comprise a change in a combination of any one or more of color, shape, dimension and position of the graphic.

The visible light may be disposed to be provided by one LED lamp or lamplight module that provides polychromatic visible light.

The light-transmissive skin layer may be made of any one or more materials of polyurethanes, polyvinyl chlorides, polystyrenes, polyolefins, polyester elastomers, polyamides, and silicone resins.

The vehicle interior trim piece further may comprise a skeleton layer, at least a partial area of the skeleton layer being made of a transparent or translucent material, and the partial area covering the multiple graphic areas of the pattern layer.

The at least partial area of the skeleton layer may be connected to other areas of the skeleton layer by any one of insert injection molding, screws, welding, gluing and clamping.

The visible light may be disposed to emit from beneath the skeleton layer when the skeleton layer is transparent or translucent, or at least a partial area of the skeleton layer is transparent or translucent.

The transparent or translucent material may comprise a combination of one or more of polycarbonate, polypropylene, polymethyl methacrylate, polystyrene, polyester and polysulfone.

The pattern layer may comprise a combination of any one or more of transparent or translucent film, painting, ink, adhesive tape and adhesive film.

The pattern layer may be formed by any one process of screen printing, hot stamping, spraying, and gluing.

The light-transmissive skin layer may further comprise a substrate on the back surface of the light-transmissive skin layer. The substrate is made of one or more of fabric, non-woven fabric and foam.

The vehicle interior trim piece may further comprise a buffer layer over the skeleton layer, the buffer layer including one or more of foam, 3D mesh, fabric, high-compressible rubber/elastomer/gel and porous foam materials.

The vehicle interior trim piece may further comprise a light uniforming layer disposed over the light source. The light uniforming layer includes a transparent or translucent sheet or film having a certain surface roughness prepared by a surface treatment process such as sanding, embossing, drawing, sandblasting, laser carving, etching, etc., or by a process such as injection, casting, extrusion, calendering, blow molding, etc., and may also include a transparent or translucent sheet or film containing a uniformly dispersed micron-sized dispersed phase. The micron-sized dispersed phase is produced by uniformly intermixing a solid and/or liquid and/or gas incompatible with the base material in a transparent or translucent sheet or film base material.

The light uniforming layer may be disposed between the light source and the skin layer. When the vehicle interior trim piece includes a buffer layer, the light uniforming layer is preferably disposed on the buffer layer.

Preferably, the light-transmissive skin layer may comprise uniformly dispersed micron-sized incompatible flame-retardant aids and/or anti-UV aids and/or pigments and/or dyes and/or fillers and/or holes formed by foaming to achieve a light uniforming effect.

The pattern layer may be disposed on any one of the following: (1) the front surface or the reverse surface of the light-transmissive skin layer; (2) the front surface or the reverse surface of the substrate; (3) the front surface or the reverse surface of the skeleton layer; (4) the front surface or the reverse surface of the light uniforming layer.

The vehicle interior trim piece may further comprise a sensor, and the sensor is disposed to be on any one of the following: (1) the reverse surface of the light-transmissive skin layer; (2) the reverse surface of the substrate; (3) the front surface or the back surface of the skeleton layer; (4) integration with a light source.

According to the present invention, there is provided a vehicle interior trim piece in which a graphic corresponding to at least one of multiple graphic areas is displayed on the surface of the vehicle interior trim piece only when a light source emits visible light, and the displayed graphic changes in response to a change in color of the visible light emitted from the light source. When the vehicle interior trim piece is applied to vehicle trim, the grade, decorative effect and driving experience of the trim are greatly improved.

### BRIEF DESCRIPTION OF THE DRAWINGS

FIG. 1 is a schematic view of a vehicle interior to which a vehicle interior trim of the present invention is applied;
FIG. 2 is an exploded view of a vehicle interior trim according to an exemplary embodiment of the present invention;
FIG. 3 is a schematic cross-sectional view of light transmitting through a light-transmissive skin layer and a pattern layer when a vehicle interior trim piece according to an exemplary embodiment of the present invention is illuminated by visible light of a second color;
FIG. 4 is a schematic cross-sectional view of light transmitting through a light-transmissive skin layer and a pattern layer when a vehicle interior trim piece according to an exemplary embodiment of the present invention is illuminated by visible light of a first color;
FIG. 5 is a schematic view showing a graphic displayed on a vehicle interior trim piece according to another exemplary embodiment of the present invention corresponding to different divided areas on a pattern layer;
FIG. 6 is a schematic cross-sectional view of light transmitting through a light-transmissive skin layer and a pattern layer when a vehicle interior trim piece according to another exemplary embodiment of the present invention is illuminated by visible light of a first color;
FIG. 7 is a schematic cross-sectional view of light transmitting through a light-transmissive skin layer and a pattern layer when a vehicle interior trim piece according to another exemplary embodiment of the present invention is illuminated by visible light of a second color;
FIG. 8A is a schematic view of a surface of a vehicle interior trim piece of the present invention when not illuminated by light from a light source;
FIG. 8B is a superposition effect view of a graphic showing on the surface when the vehicle interior trim piece according to the present invention is illuminated by visible light with different colors emitted by a light source, and it can be seen that the shape of the graphic has changed;
FIG. 8C is a superposition effect view of a graphic showing on the surface when the vehicle interior trim piece according to the present invention is illuminated by visible light with different colors emitted by a light source, and it can be seen that the position of the graphic has changed;
FIG. 8D is a superposition effect view of a graphic showing on the surface when the vehicle interior trim piece according to the present invention is illuminated by visible light with different colors emitted by a light source, and it can be seen that the size of the graphic has changed;

### DETAILED DESCRIPTION OF THE INVENTION

The present invention will now be further described with reference to the accompanying drawings. However, the present invention is not limited to these embodiments.

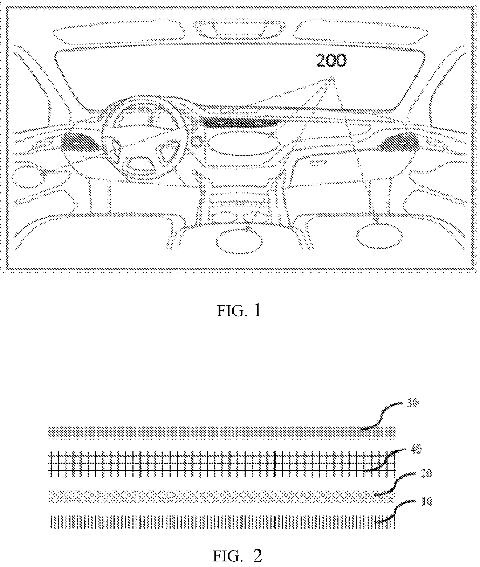

According to one preferred embodiment of the present invention, there is provided a vehicle interior trim piece 200 which can be used in a vehicle interior such as a door panel, an instrument panel, a seat, an armrest between a driver and a co-driver as shown in FIG. 1, and the like. When the vehicle interior trim piece is illuminated by the light source arranged in the vehicle interior trim piece, a specific graph can be displayed on a viewable surface of the vehicle interior trim piece, and especially when the color of the visible light emitted by a light source is changed, the graph displayed on the viewable surface of the vehicle interior trim piece can be changed accordingly, so that the decoration and illumination effects are achieved. It should be understood that the vehicle interior trim piece 200 is not limited to vehicle interior use but is also applicable to other fields.

As shown in FIG. 2, the vehicle interior trim piece includes a light-transmissive skin layer 30, a skeleton 20, and a light source 10.

The light-transmissive skin layer 30 can be made of any one or more materials of polyurethanes, polyvinyl chlorides, polystyrenes, polyolefins, polyester elastomers, polyamides and silicone resins. Among them, the polyurethanes may be thermosetting polyurethanes or thermoplastic polyurethanes. The polyvinyl chloride may be semi-rigid polyvinyl chloride or soft polyvinyl chloride obtained by mixing polyvinyl chloride with a plasticizer and may also be polyvinyl chloride elastomer obtained by mixing polyvinyl chloride with rubber such as Nitrile Butadiene Rubber (NBR). The polystyrene is primarily segmented copolymer formed by polystyrene with polybutadiene, or polyisoprene, or ethylene-propylene-rubber. The Polyolefin may be Thermoplastic olefin (TPO) or Thermoplastic Vulcanizate (TPV) obtained by mixing polypropylene or polyethylene with Ethylene-Propylene-Diene Monomer (EPDM) and may also be elastomers formed by mixing polypropylene with styrene segmented copolymer. Polyester elastomers are segmented copolymers comprising polyester hard segments and polyether or segmented copolymers formed by other polymer soft segments. The light-transmissive skin layer 30 may be formed by extrusion, casting, calendering, blow molding, and may subsequently be further stretched unidirectionally or bidirectionally to obtain a corresponding thickness; meanwhile, the light-transmissive skin layer 30 may also be a polymer or a monomer of a polymer as described mixed with water or an oily solvent to prepare a slurry, and then the slurry is coated to obtain leather.

Preferably, the back surface of the light-transmissive skin layer 30 may further be attached with a substrate 40 for optimizing mechanical properties and adhesive properties of the light-transmissive skin layer, the substrate being made of one or more of fabric, non-woven fabric, and foam.

The skeleton layer 20 is made of a transparent or translucent material including one or a combination of polycarbonates, polypropylenes, polymethyl methacrylates, polystyrenes, polyesters and polysulfones. In addition, certain mechanical reinforcing materials, such as glass fibers, carbon fibers, metal fibers, or particulate or sheet reinforcing materials of inorganic minerals or metals, may also be added to the transparent or translucent material as desired.

In the traditional design, the skeleton layer is usually made of an opaque and light-proof material, so that the light source can only be arranged above the skeleton layer. The space of a vehicle interior trim piece can be occupied and the hand feeling of a user can be influenced due to the fact that the light source has a certain thickness and hardness. Therefore, when the skeleton layer 20 is made of a transparent or translucent material and has light transmittance performance, the light source 10 may be arranged below the skeleton layer 20. The light source 10 may optionally be an LED lamp or light module providing multicolor visible light. Herein, the LED lamp may be an LED lamp strip or an array of multiple LED lamps, even multiple LED lamps arranged corresponding to a display pattern of a vehicle interior trim piece. The light module may be a flexible LED film or integration of an LED lamp with any one of a light guide plate/light guide film/reflective plate/reflective film/light uniforming plate/light uniforming film/protective casing. When the light source is chosen to be a flexible LED film, it can be arranged above the skeleton layer because it is sufficiently thin without affecting the overall thickness and hand feeling of the vehicle interior trim piece.

It is contemplated that a partial area of the skeleton layer 20 may also be made of a transparent or translucent material, and that in order to ensure that the visible light emitted by the light source 10 penetrates the partial area to illuminate the graphic displayed on the viewable surface of the vehicle interior trim piece, the partial area made of a transparent or translucent material must cover at least all of the graphics. The partial area may be connected to other areas of the skeleton layer by any one of insert injection molding, screws, welding, gluing and clamping.

The vehicle interior trim piece further includes a light uniforming layer disposed over the light source for increasing light scattering, also referred to as a light scattering layer. The light uniforming layer includes a transparent or translucent sheet or film having a certain surface roughness prepared by a surface treatment process such as sanding, embossing, drawing, sandblasting, laser carving, etching, etc., or by a process such as injection, casting, extrusion, calendering, blow molding, etc., and may also include a transparent or translucent sheet or film containing a uniformly dispersed micron-sized dispersed phase. The micron-sized dispersed phase is produced by uniformly intermixing a solid and/or liquid and/or gas incompatible with the base material in a transparent or translucent sheet or film base material. It is contemplated that the micron-sized incompatible flame retardants and/or anti-UV adjuvants and/or pigments and/or dyes and/or fillers and the like may also be uniformly intermixed in the light-transmissive skin layer and/or foaming is carries out in the light-transmissive skin layer to form micron-sized holes to achieve a light uniforming effect.

The vehicle interior trim piece further includes a pattern layer 50 that provides a graphic displayed on a viewable surface of the vehicle interior trim piece. The pattern layer includes multiple graphic areas and a peripheral area surrounding multiple graphic areas. According to one preferred embodiment, the pattern layer is a coating having multiple graphic areas and a peripheral area surrounding the multiple graphic areas formed by applying painting or ink to the surface of the light-transmissive skin layer. The coating may be arranged at any one of (1) the front or back surface of the light-transmissive skin layer 30, (2) the back surface of the substrate 40, (3) the front or back surface of the transparent skeleton 20, and (4) the front or back surface of the light uniforming layer. The coating may be applied by means of, including but not limited to, screen printing, hot stamping and other direct printing or transfer printing, or spraying and the like.

In the following, the pattern layer 50 being arranged on the back surface of the light-transmissive skin layer 30 is taken as an example to describe the invention. At least one layer of coating allowing visible light of a specific color to penetrate is disposed on the back surface of the light-transmissive skin layer 30.

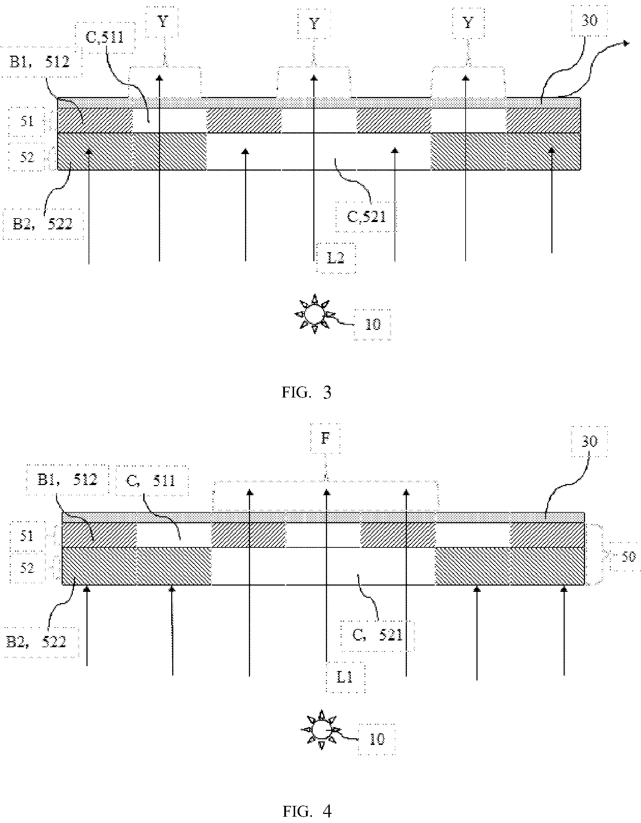

According to one embodiment, the back surface of the light-transmissive skin layer 30 is provided with two layers of coating. As shown in FIGURES 3 and 4, a first pattern layer 51 is formed on the back surface of the light-transmissive skin layer 30 by at least partially applying a translucent painting B1 of a first color (e.g., blue) to the back surface of the light-transmissive skin layer 30. A first graphic area 511 is formed where the translucent coating B1 does not cover, the first graphic area 511 being filled with a colorless transparent coating C. The area covered by the painting B1 forms a first peripheral area 512 surrounding the graphic area 511. On the back surface of the first pattern layer 51, a second pattern layer 52 is formed by at least partially applying a translucent painting B2 of a second color (e.g., red) to the back surface of the first pattern layer 51. A second graphic area 521 is formed where the translucent painting B2 does not cover, the second graphic area 521 being filled with a colorless transparent painting C. A second peripheral area 522 surrounding the second graphic area 521 is formed where the translucent painting B2 covers. It is emphasized that the first graphic area 511 and the second graphic area 521 at least partially overlap. Although the first graphic area 511 and the second graphic area 521 are filled with the colorless transparent painting C in the present embodiment, the painting C may be omitted. Even if the translucent painting B2 enters a part of the first graphic area 511 when the second pattern layer 52 is formed, the display of the graphic on the surface of the vehicle interior trim piece is not affected.

As shown in FIG. 3, when the light source 10 emits visible light of the same color as the second color (e.g., red) of the translucent painting B2, the light L2 can simultaneously transmit through the second graphic area 521 and the second peripheral area 522 of the second coating B2, but cannot transmit through the first peripheral area 512 of the first coating B1. Therefore, the graphic illuminated to show on the surface of the vehicle interior trim piece is the graphic Y corresponding to the first graphic area 511.

As shown in FIG. 4, when the light source 10 emits visible light of the same color as the first color (e.g., blue) of the translucent painting B1, the light L1 can only transmit through the second graphic area 521 of the second coating B2, and can simultaneously transmit through the first peripheral area 512 and the first graphic area 511 overlapped with the second graphic area 521 after transmitting through the second coating B2. Therefore, the graphic illuminated to show on the surface of the vehicle interior trim piece is the graphic F corresponding to the second graphic area 511.

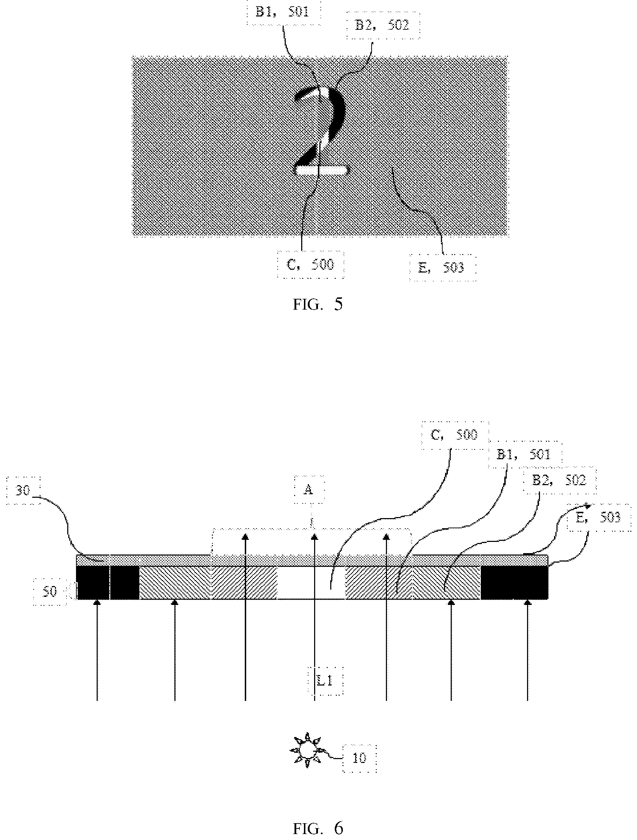

According to another embodiment, the pattern layer 50 is disposed as a 1-layer coating, as shown in FIGURES 5-7, the pattern layer 50 includes a third graphic area 501 and a fourth graphic area 502 and a peripheral area 503 surrounding the third graphic area 501 and the fourth graphic area 502, and the third graphic area 501 and the fourth graphic area 502 at least partially overlap to form an overlapping area 500. By applying a translucent painting B1 of a first color (e.g., blue) in another area on the back surface of the light-transmissive skin layer 30 corresponding to an area in the third graphic area 501 except for the overlapping area 500, applying a translucent painting B2 of a second color (e.g., red) in another area corresponding to an area in the fourth graphic area 502 except for the overlapping area 500, and applying a colorless transparent painting C in the overlapping area 500, a third graphic area 501 and a fourth graphic area 502 are thus formed. The peripheral area 503 surrounding the third graphic area 501 and the fourth graphic area 502 is formed by applying an opaque painting E or a translucent painting of a color other than the first color and the second color.

As shown in FIG. 6, when the light source 10 emits visible light of the same color as the first color (e.g., blue) of the translucent painting B1, the light L1 can transmit through the third graphic area 501 including the overlapping area 500. Therefore, the graphic illuminated to show on the surface of the vehicle interior trim piece is graphic A corresponding to the third graphic area 501.

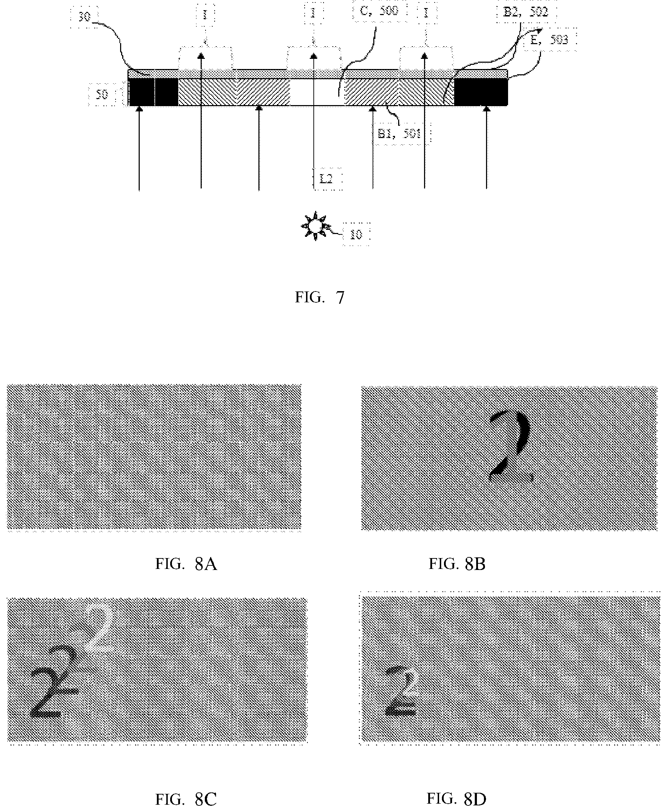

As shown in FIG. 7, when the light source 10 emits visible light of the same color as the second color (e.g., red) of the translucent painting B2, the light L2 can transmit through the fourth graphic area 502 including the overlapping area 500. Therefore, the graphic illuminated to show on the surface of the vehicle interior trim piece is the graphic I corresponding to the fourth graphic area 502.

Reference will now be made to FIGURES 8A-8D for explaining different graphics showing on the surface of the vehicle interior trim piece when the vehicle interior trim piece is illuminated by visible light of different colors. When the light source does not emit light, no graphic is displayed on the surface of the vehicle interior trim piece (as shown in FIG. 8A). When the light source emits visible light of the first color, a graphic corresponding to one of multiple graphic areas (numeral "1" shown in FIG. 8B) shows on the surface of the vehicle interior trim piece, and the graphic appears in the first color. When the light source emits visible light of the second color, a graphic corresponding to another graphic area of the multiple graphic areas (numeral "2" shown in FIG. 8B) shows on the surface of the vehicle interior trim piece, and the graphic appears in the second color. It is to be noted that in order to embody that multiple graphic areas at least partially overlap, the numerals "1" and "2" are simultaneously displayed in FIG. 8B, where as in actual use, when the numeral "1" is displayed, the numeral "2" is not displayed; vice versa. As can be seen, by changing the color of the visible light emitted by the light source, the color and shape of the graphic displayed on the surface of the vehicle interior trim piece can be changed. Furthermore, by changing the visible light emitted from the light source, it is also possible to change the color and position of the graphic displayed on the surface of the vehicle interior trim piece (numeral "2" with a position gradually shifted as shown in FIG. 8C) or to change the color, position and dimension of the graphic (numeral "2" with a dimension gradually reduced as shown in FIG. 8D). It should be understood that the graphics described herein may be images, characters, logos, or any form of a display designed by the designer.

It can be seen that by changing the number of the coatings, the color of the coatings, and the graphic area on each coating, it is possible to achieve an effect that the vehicle interior trim piece displays a different graphic as the color of the visible light emitted by the light source changes. The pattern layer 50 may be formed by one of a transparent or translucent film, adhesive film, and adhesive tape, in addition to being formed by a coating.

In order to better realize personalized decoration so as to meet the needs of customers, a decorative coating A capable of transmitting visible light of various colors can also be added on the surface of the vehicle interior trim piece. The decorative coating A is preferably a single layer and is one of the decorative colors of beige, real wood color, marble color, etc. The light transmittance performance of decorative coating A is adjusted by adjusting the thickness of the decorative coating or the concentration of color additives such as pigments, dyes and the like in the coating painting. When the pattern layer 50 is arranged on the front surface of the light-transmissive skin layer 30, the decorative coating A is applied on the front surface of the pattern layer 50; when the pattern layer 50 is arranged on the back surface of the light-transmissive skin layer 30 or the substrate 40, the decorative coating A is applied on the front surface of the light-transmissive skin layer 30.

In order to provide a soft-touch feeling, the vehicle interior trim piece is further added with a buffer layer. The buffer layer includes one or more of foam, 3D mesh, fabric, high-compressible rubber/elastomer/gel and porous foam materials. The vehicle interior trim piece can also include a sensor disposed at any position of (1) the reverse surface of the light-transmissive skin layer; (2) the reverse surface of the substrate; (3) the front surface or the back surface of the skeleton layer; (4) a position integrated with the light source, such as a pressure-sensitive sensor, a capacitive sensor, a sound sensor or a temperature sensor or the like, so that the vehicle interior trim piece may be patterned and varies in response to the sensed feedback of various environmental signals (e.g., pressure, voltage, sound, temperature, etc.).

Any two of the light-transmissive skin layer, the pattern layer, the skeleton layer, the substrate, the buffer layer, the light uniforming layer and the light source are connected through any one of bonding, welding, clamping and screw connection.

## Claims

1. A vehicle interior trim piece (200), comprising a light-transmissive skin layer (30) and a pattern layer (50), wherein the pattern layer (50) comprises multiple graphic areas (511, 521) and wherein a graphic that corresponds to at least one graphic area among the multiple graphic areas (511, 521) will only be shown on a viewable surface of the vehicle interior trim piece (200) when the vehicle interior trim piece (200) is illuminated by visible light emitted by a light source (10), and the graphic shown on the viewable surface of the vehicle interior trim piece (200) changes in response to changes to a color of the visible light, by a first and second translucent painting (B1, B2) allowing visible light of a specific color to penetrate, and wherein when the light source (10) emits visible light of a first color, a graphic corresponding to one of multiple graphic areas (511, 521) shows on the surface of the vehicle interior trim piece (200), and when the light source (10) emits visible light of a second color, a graphic corresponding to another graphic area of the multiple graphic areas (511, 521) shows on the surface of the vehicle interior trim piece (200).

2. The vehicle interior trim piece (200) of Claim 1 **characterized in that** the multiple graphic areas (511, 521) of the pattern layer (50) at least partially overlap to form an overlapping area (500).

3. The vehicle interior trim piece (200) of Claim 2 **characterized in that** when the pattern layer (50) is one layer, the overlapping area (500) of the multiple graphic areas (511, 521) is disposed to be colorless and transparent or translucent, other areas of the multiple graphic areas (511, 521) only allow light corresponding to a color of the graphic area to transmit through, and peripheral areas (503) surrounding the multiple graphic areas (511, 521) do not allow the light to transmit through.

4. The vehicle interior trim piece (200) of Claim 2 **characterized in that** when the pattern layer (50) is of multiple layers, the multiple graphic areas (511, 521) are respectively located at different said pattern layers (50), the multiple graphic areas (511, 521) are disposed to be colorless and transparent or translucent, and peripheral areas (503) of each of the pattern layer (50) surrounding the multiple graphic areas (511, 521) only allow light corresponding to a color of the peripheral area to transmit through.

5. The vehicle interior trim piece (200) of one of Claims 1 to 4 **characterized in that** a change of the graphic comprises a change in a combination of any one or more of color, shape, dimension and position of the graphic.

6. The vehicle interior trim piece (200) of one of Claims 1 to 5 **characterized in that** the visible light is disposed to be provided by one LED lamp or lamplight module that provides polychromatic visible light.

7. The vehicle interior trim piece (200) of one of Claims 1 to 6 **characterized in that** the light-transmissive skin layer (30) is made of any one or more materials of polyurethanes, polyvinyl chlorides, polystyrenes, polyolefins, polyester elastomers, polyamides, and silicone resins.

8. The vehicle interior trim piece (200) of one of Claims 1 to 7 **characterized by** comprising a framework layer (20), at least a partial area of the framework layer (20) being made of a transparent or translucent material, and the partial area covering the multiple graphic areas (511, 521) of the pattern layer (50).

9. The vehicle interior trim piece (200) of Claim 8 **characterized in that** the at least partial area of the framework layer (20) is connected to other areas of the framework layer (20) by any one of insert injection molding, screws, welding, gluing and clamping.

10. The vehicle interior trim piece (200) of Claim 8 or 9 **characterized in that** the visible light may be disposed to emit from beneath the framework layer (20) when the framework layer (20) is transparent or translucent, or at least the partial area of the framework layer (20) is transparent or translucent.

11. The vehicle interior trim piece (200) of one of Claims 8 to 10 **characterized in that** the transparent or translucent material comprises a combination of one or more of polycarbonate, polypropylene, polymethyl methacrylate, polystyrene, polyester and polysulfone.

12. The vehicle interior trim piece (200) of one of Claims 1 to 11 **characterized in that** the pattern layer (50) comprises a combination of any one or more of transparent or translucent film, painting, ink, adhesive tape and adhesive film.

13. The vehicle interior trim piece (200) of one of Claims 1 to 12 **characterized in that** the pattern layer (50) is formed by any one process of screen printing, hot stamping, spraying, and gluing.

## Patentansprüche

1. Innenverkleidungsteil (200) für ein Kraftfahrzeug, das eine lichtdurchlässige Hautschicht (30) und eine Musterschicht (50) aufweist, wobei die Musterschicht (50) mehrere Grafikbereiche (511, 521) aufweist und wobei eine Grafik, die mindestens einem Grafikbereich unter den mehreren Grafikbereichen (511, 521) entspricht, nur dann auf einer sichtbaren Oberfläche des Innenverkleidungsteils für ein Kraftfahrzeug (200) angezeigt wird, wenn das Innenverkleidungsteil (200) für ein Kraftfahrzeug durch von einer Lichtquelle (10) emittiertes sichtbares Licht beleuchtet wird, und sich die auf der sichtbaren Oberfläche des Innenverkleidungsteils (200) für ein Kraftfahrzeug angezeigte Grafik als Reaktion auf Änderungen einer Farbe des sichtbaren Lichts durch einen ersten und einen zweiten durchscheinenden Anstrich ändert (B1, B2), der sichtbares Licht einer bestimmten Farbe durchlässt, und wobei, wenn die Lichtquelle (10) sichtbares Licht einer ersten Farbe emittiert, eine Grafik, die einem der mehreren Grafikbereiche (511, 521) entspricht, auf der Oberfläche des Innenverkleidungsteils (200) für ein Kraftfahrzeug zu sehen ist, und wenn die Lichtquelle (10) sichtbares Licht einer zweiten Farbe emittiert, eine Grafik, die einem anderen Grafikbereich der mehreren Grafikbereiche (511, 521) entspricht, auf der Oberfläche des Innenverkleidungsteils (200) für ein Kraftfahrzeug zu sehen ist.

2. Innenverkleidungsteil (200) für ein Kraftfahrzeug nach Anspruch 1,
**dadurch gekennzeichnet, dass** sich die mehreren Grafikbereiche (511, 521) der Musterschicht (50) zumindest teilweise überlappen, um einen Überlappungsbereich (500) zu bilden.

3. Innenverkleidungsteil (200) für ein Kraftfahrzeug nach Anspruch 2,
**dadurch gekennzeichnet, dass**, wenn die Musterschicht (50) eine Schicht ist, der überlappende Bereich (500) der mehreren Grafikbereiche (511, 521) so angeordnet ist, dass er farblos und transparent oder durchscheinend ist, andere Bereiche der mehreren Grafikbereiche (511, 521) nur Licht durchlassen, das einer Farbe des Grafikbereichs entspricht, und Randbereiche (503), die die mehreren Grafikbereiche (511, 521) umgeben, kein Licht durchlassen.

4. Innenverkleidungsteil (200) für ein Kraftfahrzeug nach Anspruch 2, **dadurch gekennzeichnet, dass**, wenn die Musterschicht (50) aus mehreren Schichten besteht, die mehreren Grafikbereiche (511, 521) jeweils an verschiedenen der Musterschichten (50) angeordnet sind, die mehreren Grafikbereiche (511, 521) farblos und transparent oder durchscheinend angeordnet sind und die Randbereiche (503) jeder der die mehreren Grafikbereiche (511, 521) umgebenden Musterschicht (50) nur Licht durchlassen, das einer Farbe des Randbereichs entspricht.

5. Innenverkleidungsteil (200) für ein Kraftfahrzeug nach einem der Ansprüche 1 bis 4, **dadurch gekennzeichnet, dass** eine Änderung der Grafik eine Änderung einer Kombination aus einem oder mehreren der Farbe, Form, Abmessung und Position der Grafik aufweist.

6. Innenverkleidungsteil (200) für ein Kraftfahrzeug nach einem der Ansprüche 1 bis 5, **dadurch gekennzeichnet, dass** das sichtbare Licht durch eine LED-Lampe oder ein Lampenlichtmodul bereitgestellt wird, das polychromatisches sichtbares Licht liefert.

7. Innenverkleidungsteil (200) für ein Kraftfahrzeug nach einem der Ansprüche 1 bis 6, **dadurch gekennzeichnet, dass** die lichtdurchlässige Hautschicht (30) aus einem oder mehreren Materialien aus Polyurethanen, Polyvinylchloriden, Polystyrolen, Polyolefinen, Polyesterelastomeren, Polyamiden und Silikonharzen besteht.

8. Innenverkleidungsteil (200) für ein Kraftfahrzeug nach einem der Ansprüche 1 bis 7, **dadurch gekennzeichnet, dass** es eine Rahmenschicht (20) aufweist, wobei mindestens ein Teilbereich der Rahmenschicht (20) aus einem transparenten oder durchscheinenden Material besteht und der Teilbereich die mehreren Grafikbereiche (511, 521) der Musterschicht (50) bedeckt.

9. Innenverkleidungsteil (200) für ein Kraftfahrzeug nach Anspruch 8,
**dadurch gekennzeichnet, dass** mindestens der Teilbereich der Rahmenschicht (20) mit anderen Bereichen der Rahmenschicht (20) durch Einlagespritzguss, Schrauben, Schweißen, Kleben und Festklemmen verbunden ist.

10. Innenverkleidungsteil (200) für ein Kraftfahrzeug nach Anspruch 8 oder 9, **dadurch gekennzeichnet, dass** das sichtbare Licht so angeordnet sein kann, dass es unterhalb der Rahmenschicht (20) austritt, wenn die Rahmenschicht (20) transparent oder durchscheinend ist oder zumindest der Teilbereich der Rahmenschicht (20) transparent oder durchscheinend ist.

11. Innenverkleidungsteil (200) für ein Kraftfahrzeug nach einem der Ansprüche 8 bis 10, **dadurch gekennzeichnet, dass** das transparente oder durchscheinende Material eine Kombination aus einem oder mehreren von Polycarbonat, Polypropylen, Polymethylmethacrylat, Polystyrol, Polyester und Polysulfon aufweist.

12. Innenverkleidungsteil (200) für ein Kraftfahrzeug nach einem der Ansprüche 1 bis 11, **dadurch gekennzeichnet, dass** die Musterschicht (50) eine Kombination aus einem oder mehreren von transparenter oder durchscheinender Folie, Anstrich, Tinte, Klebeband und Klebefolie aufweist.

13. Innenverkleidungsteil (200) für ein Kraftfahrzeug nach einem der Ansprüche 1 bis 12, **dadurch gekennzeichnet, dass** die Musterschicht (50) durch irgendein Verfahren aus Siebdruck, Heißprägen, Sprühen und Kleben gebildet ist.

## Revendications

1. Pièce d'habillage d'intérieur de véhicule (200), comprenant une couche de peau transmettant la lumière (30) et une couche à motifs (50), dans laquelle la couche à motifs (50) comprend de multiples zones graphiques (511, 521) et dans laquelle un graphisme qui correspond à au moins une zone graphique parmi les multiples zones graphiques (511, 521) sera uniquement montré sur une surface visible de la pièce d'habillage d'intérieur de véhicule (200) quand la pièce d'habillage d'intérieur de véhicule (200) est illuminée par une lumière visible émise par une source de lumière (10), et le graphisme montré sur la surface visible de la pièce d'habillage d'intérieur de véhicule (200) change en réponse à des changements d'une couleur de la lumière visible, par l'intermédiaire d'une première et d'une seconde peinture translucide (B1, B2) permettant à une lumière visible d'une couleur spécifique de pénétrer, et dans laquelle, quand la source de lumière (10) émet une lumière visible d'une première couleur, un graphisme correspondant à l'une de multiples zones graphiques (511, 521) apparaît sur la surface de la pièce d'habillage d'intérieur de véhicule (200), et quand la source de lumière (10) émet une lumière visible d'une seconde couleur, un graphisme correspondant à une autre zone graphique des multiples zones graphiques (511, 521) apparaît sur la surface de la pièce d'habillage d'intérieur de véhicule (200).

2. Pièce d'habillage d'intérieur de véhicule (200) selon la revendication 1, **caractérisée en ce que** les multiples zones graphiques (511, 521) de la couche à motifs (50) se chevauchent au moins en partie pour former une zone de chevauchement (500).

3. Pièce d'habillage d'intérieur de véhicule (200) selon la revendication 2, **caractérisée en ce que**, quand la couche à motifs (50) est en une seule couche, la zone de chevauchement (500) des multiples zones graphiques (511, 521) est disposée de façon à être sans couleur et transparente ou translucide, d'autres zones des multiples zones graphiques (511, 521) permettent uniquement à une lumière correspondant à une couleur de la zone graphique d'être transmise à travers elles, et des zones périphériques (503) entourant les multiples zones graphiques (511, 521) ne permettent pas à la lumière d'être transmise à travers elles.

4. Pièce d'habillage d'intérieur de véhicule (200) selon la revendication 2, **caractérisée en ce que**, quand la couche à motifs (50) est en couches multiples, les multiples zones graphiques (511, 521) sont situées respectivement au niveau desdites différentes couches à motifs (50), les multiples zones graphiques (511, 521) sont disposées de façon à être sans couleur et transparentes ou translucides, et des zones périphériques (503) de chacune des couches à motifs (50) entourant les multiples zones graphiques (511, 521) permettent uniquement à une lumière correspondant à une couleur de la zone périphérique d'être transmise à travers elles.

5. Pièce d'habillage d'intérieur de véhicule (200) selon l'une des revendications 1 à 4,
**caractérisée en ce qu'**un changement du graphisme comprend un changement dans une combinaison d'un de plusieurs éléments parmi : une couleur, une forme, une dimension et une position du graphisme.

6. Pièce d'habillage d'intérieur de véhicule (200) selon l'une des revendications 1 à 5,
**caractérisée en ce que** la lumière visible est disposée de façon à être fournie par une lampe LED ou un module d'éclairage qui fournit une lumière visible polychromatique.

7. Pièce d'habillage d'intérieur de véhicule (200) selon l'une des revendications 1 à 6,
**caractérisée en ce que** la couche de peau transmettant la lumière (30) est faite à partir d'un ou de plusieurs matériaux parmi : polyuréthanes, chlorures de polyvinyle, polystyrènes, polyoléfines, élastomères de polyester, polyamides, et résines de silicone.

8. Pièce d'habillage d'intérieur de véhicule (200) selon l'une des revendications 1 à 7,
**caractérisée en ce qu'**elle comprend une couche de structure (20), au moins une zone partielle de la couche de structure (20) étant faite en matériau transparent ou translucide, et la zone partielle recouvrant les multiples zones graphiques (511, 521) de la couche à motifs (50).

9. Pièce d'habillage d'intérieur de véhicule (200) selon la revendication 8, **caractérisée en ce que** ladite au moins une zone partielle de la couche de structure (20) est connectée à d'autres zones de la couche de structure (20) par l'un au moins des moyens suivantes : moulage par injection sur insert, vis, soudage, collage et serrage.

10. Pièce d'habillage d'intérieur de véhicule (200) selon la revendication 8 ou 9,
caractérisée en ce la lumière visible peut être disposée pour émettre par en dessous de la couche de structure (20) quand la couche de structure (20) est transparente ou translucide, ou qu'au moins une zone partielle de la couche de structure (20) est transparente ou translucide.

11. Pièce d'habillage d'intérieur de véhicule (200) selon l'une des revendications 8 à 10,
**caractérisée en ce que** le matériau transparent ou translucide comprend une combinaison d'un ou de plusieurs matériaux parmi : polycarbonate, polypropylène, polyméthyle méthacrylate, polystyrène, polyester et polysulfone.

12. Pièce d'habillage d'intérieur de véhicule (200) selon l'une des revendications 1 à 11,
**caractérisée en ce que** la couche à motifs (50) comprend une combinaison d'un ou de plusieurs éléments parmi : un film, une peinture, une encre, un ruban adhésif et un film adhésif, transparents ou translucides.

13. Pièce d'habillage d'intérieur de véhicule (200) selon l'une des revendications 1 à 12,
**caractérisée en ce que** la couche à motifs (50) est formée par un processus quelconque parmi : sérigraphie, emboutissage à chaud, pulvérisation et collage.
